Europäisches Patentamt

European Patent Office

Office européen des brevets

(19)

(11) Numéro de publication : **0 530 077 A1**

(12) # DEMANDE DE BREVET EUROPEEN

(21) Numéro de dépôt : **92402295.7**

(51) Int. Cl.⁵ : **G01V 3/15**

(22) Date de dépôt : **17.08.92**

(30) Priorité : **22.08.91 FR 9110528**

(43) Date de publication de la demande :
**03.03.93 Bulletin 93/09**

(84) Etats contractants désignés :
**AT BE CH DE DK ES GB GR IT LI LU MC NL PT SE**

(71) Demandeur : **SOCIETE D'EXPLOITATION DE PRODUITS ET DE TECHNIQUES POUR L'AERONAUTIQUE ET L'AUTOMATIQUE dite SEPTA**
**47 rue Marx Dormoy**
**F-75018 Paris (FR)**

(71) Demandeur : **CENTRE NATIONAL DE LA RECHERCHE SCIENTIFIQUE**
**15, quai Anatole France**
**F-75007 Paris (FR)**

(72) Inventeur : **Jolivet, Alain**
**2 Quai de la Tête de l'Ourch**
**La Charite sur Loire (Nièvre) (FR)**

(74) Mandataire : **Cabinet Pierre HERRBURGER**
**115, Boulevard Haussmann**
**F-75008 Paris (FR)**

(54) **Installation de prospection géophysique.**

(57) Installation comprenant au moins deux surfaces conductrices susceptibles de se déplacer à faible distance du sol, afin de former les armatures de condensateurs dont le sol constitue la seconde armature, installation caractérisée en ce qu'elle se compose d'un chariot supporté par des moyens de roulement (1) appliqués sur le sol par leur face externe, les surfaces conductrices de cette installation étant appliquées sur la face interne de chaque moyen de roulement.

FIG.1

EP 0 530 077 A1

Diverses méthodes de prospection géophysique de sub-surface impliquent l'utilisation d'électrodes ou de pôles que l'on déplace à la surface du sol avec le souci de les maintenir, au cours de leur translation, à une distance du sol qui est faible et sensiblement constante. C'est le cas de certaines méthodes électromagnétiques qui requièrent la connaissance du champ électrique local, et c'est aussi celui d'une méthode électrique fondée sur l'injection dans le sol de courants alternatifs basse ou haute fréquence pour mesurer sa conductivité électrique et sa permittivité diélectrique.

Cette dernière méthode de la mesure de la résistivité électrique s'apparente à la prospection électrique des sols pratiquée en courant continu ou alternatif très basse fréquence, mais elle n'exige pas l'emploi d'électrodes à contact conductif avec le sol telles que des piquets déplacés à la main ou des roues métalliques tractées. La circulation du courant dans le milieu étudié est provoquée, au niveau de deux pôles identiques, ou dipôle, par l'influence électrostatique exercée dans un condensateur dont une armature est constituée par une plaque conductrice déplacée au-dessus du sol, celui-ci constituant l'autre armature. L'air et les matériaux isolants interposés entre ces armatures constituent le diélectrique du condensateur.

L'utilisation de quatre pôles comprenant un dipôle d'injection et un dipôle de mesure, semblables, permet de définir le rapport $\dfrac{\Delta V}{I}$ de la tension recueillie au courant injecté, c'est-à-dire l'impédance de transfert du quadripôle, qui est fonction de sa géométrie et des paramètres électriques du milieu.

Cette installation permet de prospecter le sous-sol en détectant des anomalies locales de sa résistivité électrique, anomalies révélatrices de la présence éventuelles de structures en formes telles qu'excavations, galeries, fosses comblées, structures archéologiques, etc.

Le quadripôle ainsi constitué dont la distance des pôles est en général de l'ordre du mètre, peut être remorqué à faible allure, quelques kilomètres par heure, sur des terrains variés, ou bien à plus grande vitesse, quelques dizaines de kilomètres par heure, sur des chaussées routières. Ces conditions d'emploi extrêmes mettent en évidence les difficultés que l'on peut rencontrer lors d'exécution de mesures.

Des techniques relativement simples permettent de déplacer une surface métallique au niveau du sol. Le brevet américain N° 3 361 957 déposé le 2 Janvier 1968, décrit un certain nombre de réalisations destinées à effectuer des mesures du champ tellurique. Suivant les conditions de leur emploi, il s'agit de nappes conductrices en grillage, de faisceaux d'éléments linéaires, ou d'autres formes encore, que des pièces mécaniques aident à déployer sur le terrain.

Le brevet français N° 73 11 573 du 30 Mars 1973 reprend la même idée pour l'appliquer aux mesures de résistivité des sols par la méthode magnéto-tellurique. Dans ce brevet il est proposé de traîner par terre un tapis en élastomère souple et isolant dont la face supérieure est recouverte par une feuille ou une toile métallique mince. L'équivalent d'une "ligne tellurique" est obtenu en disposant ainsi deux nappes métalliques distinctes aux extrémités d'un tapis allongé qui maintient constant leur écart.

Selon le même principe, il serait possible de placer quatre feuilles aux angles d'un tapis carré pour former un quadripôle électrostatique complet qui serait déplacé sur le sol. Toutefois, cette solution ne peut convenir qu'en phase expérimentale, compte tenu des inconvénients qui en résulteraient relatifs à la résistance à l'avancement du tapis même sur terrain sec, à la forte abrasion par frottement sur le sol, à l'effet de succion et d'adhérence du tapis sur sol humide ou boueux, et enfin à la tendance du support souple à s'aligner sur les sommets du micro-relief ou ceux de la végétation, ce qui obligerait à lester le dispositif pour diminuer cet effet et réduire la distance au sol en augmentant cependant l'abrasion. Un tel dispositif est en outre d'une utilisation difficile à grande vitesse de déplacement.

La présente invention a notamment pour but de remédier à ces inconvénients et concerne à cet effet une installation de prospection géophysique comprenant au moins deux surfaces conductrices susceptibles de se déplacer à faible distance du sol, afin de former les armatures de condensateurs dont le sol constitue la seconde armature, installation caractérisée en ce qu'elle se compose d'un chariot supporté par des moyens de roulement appliqués sur le sol par leur face externe, les surfaces conductrices de cette installation étant appliquées sur la face interne de chaque moyen de roulement.

Suivant une autre caractéristique de l'invention, chaque moyen de roulement est constitué par une roue comportant une jante supportant une enveloppe, la surface conductrice étant appliquée sur la face interne de la bande de roulement de l'enveloppe.

Suivant une autre caractéristique de l'invention, la roue est montée à rotation sur une fusée, la surface conductrice étant supportée par la fusée de la roue.

L'invention est représentée à titre d'exemple non limitatif sur les dessins ci-joints dans lesquels :

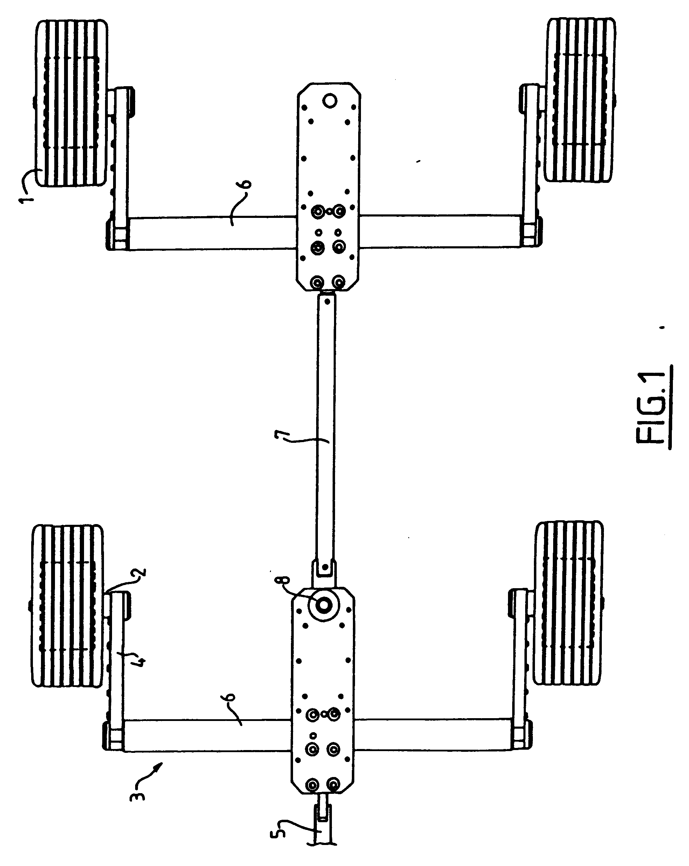

   - la figure 1 est une vue de dessus d'une installation conforme à l'invention,

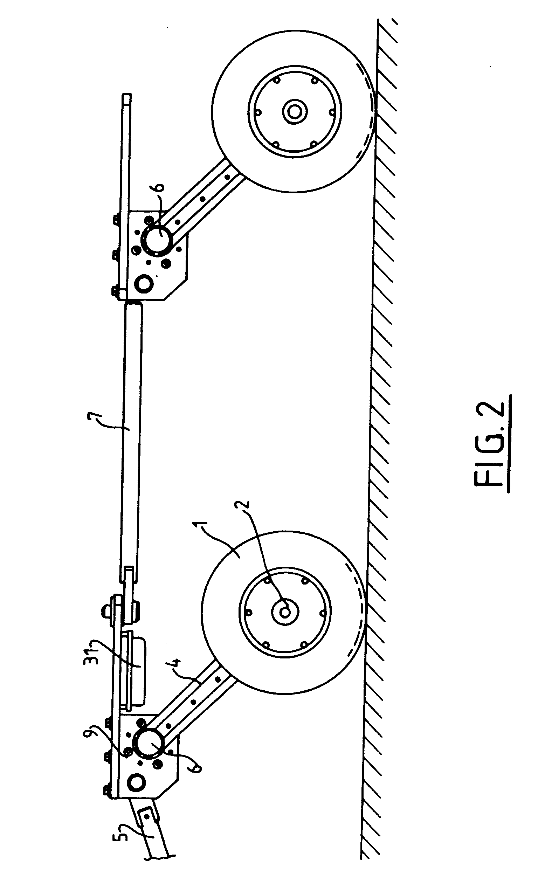

   - la figure 2 est une vue latérale de la figure 1,

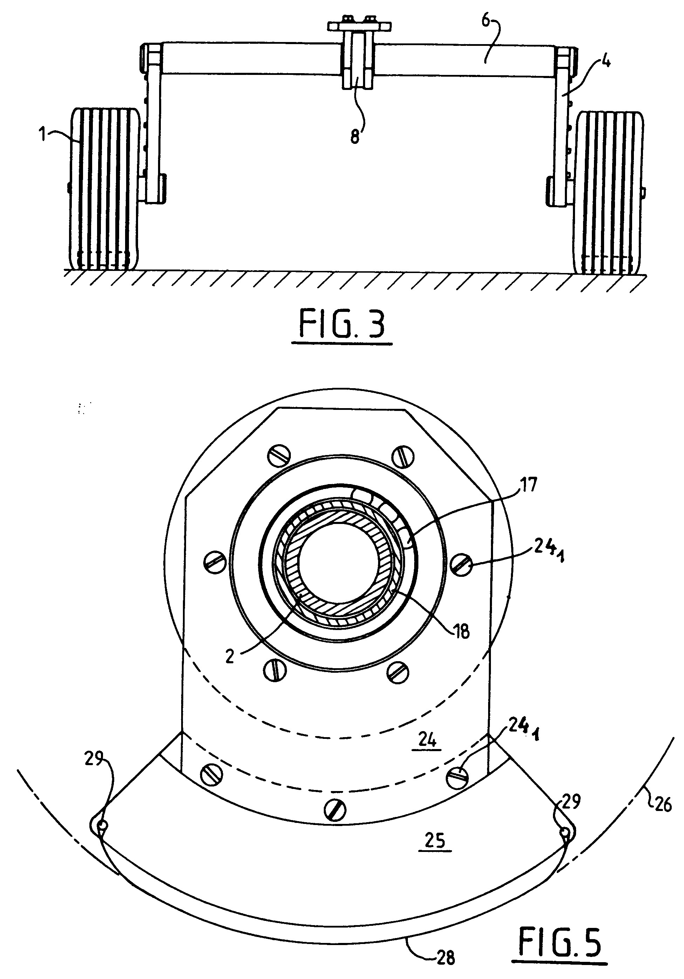

   - la figure 3 est une vue de gauche de la figure 2,
   - la figure 4 est une vue en coupe verticale d'une des roues du chariot des figures 1, 2 et 3,
   - la figure 5 est une vue de gauche de l'ensemble balancier de la roue de la figure 4.

La présente invention a pour but la réalisation d'une installation qui permette l'exécution de mesures précises lors de la prospection du sous-sol, ces mesures pouvant être effectuées sans inconvénient à des vitesses de déplacement importantes de l'installation, de l'ordre de 50 km à l'heure.

L'invention consiste à mettre en oeuvre un chariot qui, dans l'exemple représenté sur les dessins, comprend quatre roues 1 tournant librement sur leur fusée 2 qui supportent un châssis 3 par l'intermédiaire de bras oscillants inclinés 4.

Le châssis 3 est relié à une barre de traction 5 pour le déplacement du chariot et se compose de deux essieux 6 reliés par un longeron médian 7 articulé en 8.

Les bras oscillants 4 sont reliés aux extrémités des essieux 6 par l'intermédiaire d'un système de suspension à ressorts ou similaire 9.

Les roues de ce chariot constituent les armatures ou pôles du quadripôle de mesure.

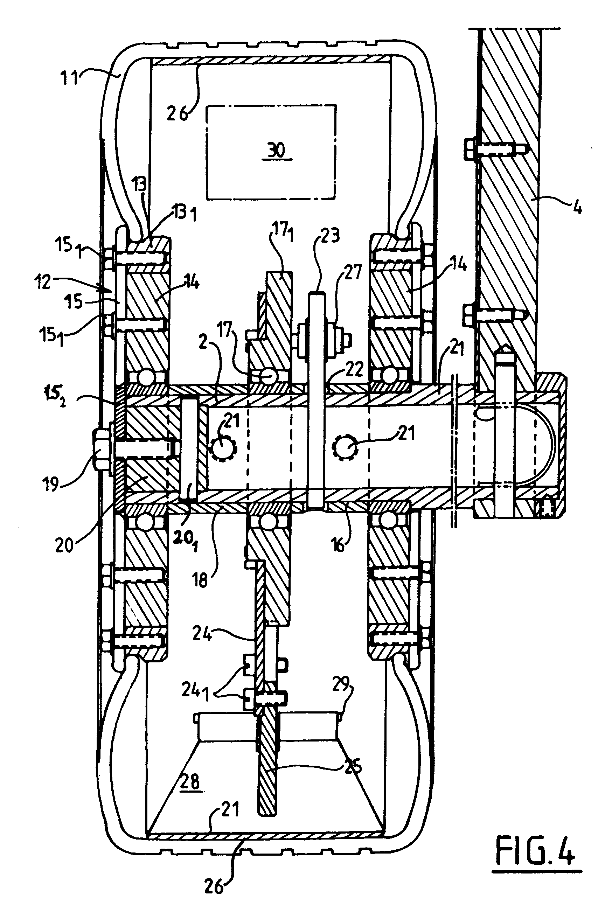

Ces roues se composent (voir figure 4) d'une enveloppe 11 qui est maintenue à la périphérie d'une jante 12 se composant de deux flasques identiques composés chacun de trois pièces 13, 14 et 15 montées sur la fusée 2 en forme de tube. L'anneau 13 de profil asymétrique, est appliqué par son rebord périphérique $13_1$ contre le bord intérieur du talon de l'enveloppe. L'alésage cylindrique de l'anneau 13 reçoit le roulement à billes 14 monté sans jeu. La couronne extérieure de ce roulement accompagne la rotation de la roue alors que son moyeu fixe est solidaire de la fusée 2. L'anneau 13 et la couronne de roulement 14 sont réunis par le disque 15 pressé sur leurs faces externes co-planaires par deux séries de boulons $15_1$. Les périphéries du disque 15 et de l'anneau 13 délimitent une gorge démontable qui maintient le talon de l'enveloppe dans un plan fixe.

La fusée tubulaire 2 introduite dans le moyeu des deux roulements 14 aligne leurs axes et fixe l'intervalle qui sépare les flasques de la jante.

La fusée 2 est constituée par un tube cylindrique comportant deux extrémités de même diamètre et de longueur inégale séparées par un épaulement $2_1$. La partie la plus courte relie la fusée au bras oscillant 4 tandis que la partie la plus longue supporte la roue 1.

L'un des flasques de la jante 12 est en appui contre cet épaulement $2_1$ et reçoit ensuite une bague tubulaire 16 puis un roulement central 17 et enfin une seconde bague entretoise 18, ces pièces étant immobilisées sur la fusée 2 par la pression axiale qu'exerce le boulon 19 s'appuyant par le couvercle $15_2$ sur le moyeu du roulement extérieur 14. Cet empilage est serré contre l'épaulement $2_1$ de la fusée par le boulon 19 qui est vissé dans un bouchon cylindrique 20, lui-même maintenu dans l'alésage de la fusée 2 par la goupille $20_1$ que la bague 18 emprisonne dans son logement.

Quatre trous 21 traversent en concordance la paroi de la fusée 2 et celle des bagues entretoises 16 et 18 pour faire communiquer l'intérieur de la fusée avec le volume intérieur de la roue, ces trous étant utilisés pour le passage de câbles électriques des circuits électroniques de mesure. Deux autres trous coaxiaux 22, d'axe vertical, sont réalisés dans la fusée 2 et dans la bague 16. Ces trous sont traversés par une tige 23 dont l'extrémité inférieure se visse dans la fusée. Sa partie supérieure, extérieure à la bague 16, constitue l'élément fixe d'un dispositif qui limite l'amplitude et amortit les oscillations d'un balancier monté sur le roulement central 17.

Quand le bras, sollicité par les mouvements du terrain, oscille autour de son angle moyen, la tige 23 balaye un secteur circulaire et, pour éviter que dans ce cas l'armature métallique du dipôle de cette roue décrive des mouvements d'oscillations indésirables, il est nécessaire de suspendre cette armature à un système pendulaire.

A cet effet, le roulement à billes 17 situé dans le plan de symétrie de la roue, constitue l'articulation d'un balancier. Sur la pièce épaulée $17_1$ qui forme la bague extérieure du roulement 17 s'encastre le balancier proprement dit qui est formé du bras 24 et du secteur circulaire 25, ces trois pièces $17_1$, 24 et 25 étant assemblées par des boulons $24_1$.

Le secteur circulaire 25 s'inscrit dans un angle de 90° (voir figure 5) et une distance faible, de l'ordre de 10 mm, sépare son bord inférieur de la paroi interne d'un cylindre 26 par exemple en verre époxyde qui est maintenu, éventuellement par collage, contre la face interne de la bande de roulement de l'enveloppe 11.

Ce cylindre 26 en matériau isolant a pour but de maintenir la bande de roulement de l'enveloppe 11 sous une forme cylindrique indépendamment du poids du chariot et des aspérités du sol.

Ce cylindre 26 est fendu transversalement, par exemple suivant l'une de ses génératrices, afin de permettre son introduction par déformation à l'intérieur de l'enveloppe.

Bien entendu, le développement de la circonférence de ce cylindre 26 est ajusté pour qu'il se plaque fermement, en extension, contre la face interne de la bande de roulement de l'enveloppe 11 afin que cette enveloppe épouse son profil rectiligne et reproduise, à l'extérieur, sa forme cylindrique. L'enveloppe et le tube constituent ainsi une paroi composite semi-rigide d'épaisseur constante, comme cela est souhaitable, cette enveloppe étant maintenue, avec une certaine souplesse, coaxialement à la fusée 2 par les flancs de l'enveloppe.

Dans la pratique, cette distance de l'ordre de 10 mm entre la face interne du cylindre 26 et le bord inférieur secteur circulaire 25, suffit pour empêcher que l'enveloppe composite vienne heurter le bas du balancier lorsqu'elle se déforme, pendant le déplacement du chariot, sous l'effet de chocs ou d'aspérités prononcées de la surface du sol.

Le caractère relativement massif des éléments du balancier lui confère une inertie qui contribue à le maintenir naturellement en position quasi verticale.

Cependant, les oscillations qu'il pourrait subir sous l'effet des accélérations incessantes imprimées à la fusée, doivent être freinées. A cet effet, il est prévu un amortisseur 27, par exemple à friction, qui est interposé entre la tige 23 solidaire de la fusée 2 et la pièce épaulée $17_1$ du roulement 17.

La pièce métallique qui forme avec la surface conductrice du sol et les matériaux diélectriques qui l'en séparent le pôle électrostatique proprement dit, est constituée par une feuille métallique rectangulaire suspendue entre le secteur 25 et le cylindre 26. Dans l'exemple représenté, les deux angles inférieurs du secteur 25 sont traversés par des tiges métalliques 29, en laiton par exemple, qui dépassent symétriquement de chaque côté du secteur 25. La feuille métallique 28 par exemple en chrysocale possède à ses extrémités deux ourlets qui servent à la suspendre aux tiges 29. La distance des tiges 19 et la longueur de l'armature 28 sont telles que le poids de l'armature et sa déformabilité l'amènent au contact du cylindre 26. La longueur de l'armature 28 est ajustée pour que ce contact s'établisse dans l'ouverture d'un angle de 70° environ, sa largeur étant au minimum égale à celle du cylindre 2, voire même un peu supérieure.

Compte tenu de sa légèreté et des faibles efforts dûs à sa déformation, la feuille conductrice 28 n'exerce qu'une très faible pression sur la face interne du cylindre 26. Afin de réduire encore l'effet de cette pression, le cylindre 26 est tapissé sur sa face interne par une bande adhésive 21 par exemple en tissu de verre imprégné de polytétrafluoréthylène afin de réduire les frottements.

L'armature 28 formant l'un des pôles électrostatiques est incluse dans un ensemble électronique dont le bon fonctionnement exige des liaisons courtes. Ce résultat est obtenu suivant l'invention en fixant ce circuit sur le balancier ou sur la fusée, suivant le cas. Le rectangle 30 représenté sur la figure 4 symbolise la présence de cette électronique à l'intérieur de la roue, cette électronique étant reliée à la lame souple d'armature 28 ainsi qu'à un ensemble de mesure fixée sur le châssis du chariot.

Le circuit électronique 30 disposé à l'intérieur de la roue, est relié à cet ensemble de mesure par des conducteurs disposés au travers des trous 21.

Le chariot comporte également un dispositif radar 31 destiné à mesurer ses déplacements et déterminer sa position sur le profil parcouru.

La réunion au sein d'une roue des pièces formant un pôle électrostatique actif conformément à l'invention, permet de répondre aux exigences de son emploi, notamment en prospection géophysique, cette disposition permettant de maintenir l'armature du pôle au contact de l'enveloppe diélectrique et donc à distance faible et constante du sol.

Egalement, du fait de la souplesse et de l'élasticité de construction et de montage de l'armature et de l'enveloppe, elles se déforment ensemble tandis que le frottement est limité afin de réduire l'échauffement et l'usure.

par ailleurs, la construction symétrique de la roue permet sa rotation dans les deux sens, tandis que la disposition de l'ensemble électronique de mesure à l'intérieur de l'enveloppe, de préférence réalisée sous la forme d'un pneu, non seulement permet des mesures précises mais encore assure la protection des organes mécaniques et électriques contre les agressions du terrain et les intempéries.

La mise en oeuvre d'un moyen de roulement appliqué sur le sol par sa face externe et sur la face interne duquel est appliquée l'une des armatures conductrices d'un condensateur, constitue l'essentiel de l'invention. La mise en oeuvre de cette caractéristique peut conduire à des formes très variées suivant l'usage spécifique du dipôle réalisé et on peut en évoquer quelques-unes pour illustrer leur diversité.

Ainsi, le profil circulaire du tambour est modifiable. Il pourra par exemple être réalisé sous la forme d'une courroie plane et souple constituant un genre de chenille se déformant sur la surface du milieu avec lequel il est mis en contact.

Particulièrement, s'il épouse la forme d'une chenille, ce moyen de roulement pourra contenir deux armatures distinctes et devenir, dans ce cas, un dipôle complet.

Egalement, les armatures 28 peuvent être réalisées de différentes manières. par exemple, on peut mettre en oeuvre la gravité pour maintenir une armature dans le fond d'un moyen de roulement animé d'un mouvement de rotation sensiblement uniforme. Cette armature peut alors ressembler à un petit chariot roulant sur une piste sans fin à la manière de l'écureuil dans sa cage. Sur le même principe, il pourrait également être envisagé la mise en oeuvre d'une armature liquide retenue dans une piste étanche en forme de gouttière, prévue sur la face interne du moyen de roulement.

Dans l'exemple représenté, l'installation est réalisée sous la forme d'un chariot comportant quatre roues définissant deux dipôles l'un d'injection l'autre de mesure. Cependant, ce chariot pourra être réduit à sa plus simple expression et ne comporter qu'un seul dipôle par exemple à deux roues comportant chacune une surface conductrice, ce dipôle constituant soit un dipôle de mesure, soit un dipôle d'injection par exemple dans le cas d'une prospection géophysique de mesure du champ électrique local.

Enfin, il convient de noter que pour réduire l'influence des capacités parasites sur les circuits d'injection et de mesure au niveau des éléments mécaniques tant de la roue que du bâti, le métal sera de préférence réservé pour les fonctions électriques. En particulier, le cylindre 26 pourra être réalisé en verre époxyde tandis que les pièces 13, 14, 15 et leurs boulons seront, de préférence, réalisées en polyacétal et la fusée 2 en fibre de verre. Les autres pièces telles

que $17_1$, 24, 25 et leurs boulons, pourront être réalisées en matière plastique isolante plus commune.

Egalement, dans l'exemple représenté, les roues du chariot sont conçues pour rouler à une vitesse importante, de l'ordre de 50 km/heure, ce qui ne peut valablement être obtenu qu'en mettant en oeuvre des roulements à billes 14, 17. Cependant, d'autres applications moins exigeantes toléreraient l'emploi de bagues et paliers associant divers matériaux plastiques, voire même partiellement métalliques, choisis pour leur faible coefficient de frottement.

Il convient également de noter que dans certaines réalisations le balancier qui est destiné à compenser les variations d'oscillations des bras 4, pourra être supprimé, la structure 24, 25 étant dans ce cas fixée à la fusée 2. Cette disposition facilitera alors la mise en oeuvre du chariot sur un terrain incliné.

## Revendications

1°) Installation de prospection géophysique comprenant au moins deux surfaces conductrices susceptibles de se déplacer à faible distance du sol, afin de former les armatures de condensateurs dont le sol constitue la seconde armature, installation caractérisée en ce qu'elle se compose d'un chariot supporté par des moyens de roulement (1) appliqués sur le sol par leur face externe, les surfaces conductrices de cette installation étant appliquées sur la face interne de chaque moyen de roulement.

2°) Installation conforme à la revendication 1, caractérisée en ce que chaque moyen de roulement est constitué par une roue comportant une jante (12) supportant une enveloppe (11), la surface conductrice (28) étant appliquée sur la face interne de la bande de roulement de l'enveloppe (11).

3°) Installation conforme à la revendication 2, caractérisée en ce que la roue est montée à rotation sur une fusée (2), la surface conductrice (28) étant supportée par la fusée de la roue.

4°) Installation conforme à la revendication 3, caractérisée en ce que la fusée (2) de la roue (1) est montée sur un chariot (6, 7) par un bras de suspension oscillant (7) et la surface conductrice est montée à libre rotation sur la fusée (2) par un ensemble à balancier ($17_1$, 24, 25).

5°) Installation conforme à la revendication 1, caractérisée en ce que le moyen de roulement contient un ensemble électronique (30) relié à la surface conductrice (28) formant l'armature d'un condensateur.

6°) Installation conforme à la revendication 5, caractérisée en ce que l'ensemble électronique (30) est relié à l'extérieur du moyen de roulement (1) par des câbles passant au travers de trous (21) réalisés dans la fusée (2).

FIG.1

EP 0 530 077 A1

FIG. 2

EP 0 530 077 A1

FIG. 3

FIG.5

8

FIG.4

**Office européen des brevets**

# RAPPORT DE RECHERCHE EUROPEENNE

Numero de la demande

EP    92 40 2295

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 002 149 (CHRISTIAN)<br>* colonne 1, ligne 57 - colonne 2, ligne 62; figures 1-4 *<br>--- | 1 | G01V3/15 |
| A | DE-A-2 712 633 (FORSTER)<br>* page 5, ligne 30 - page 7, ligne 9; figures 2,3 *<br>----- | 1 | |

**DOMAINES TECHNIQUES RECHERCHES (Int. Cl.5)**

G01V
G01N

Le présent rapport a été établi pour toutes les revendications

| Lieu de la recherche | Date d'achèvement de la recherche | Examinateur |
|---|---|---|
| LA HAYE | 09 DECEMBRE 1992 | ANDERSON A.TH. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

10